# EUROPEAN PATENT APPLICATION

(11) **EP 4 534 320 A1**
(43) Date of publication of application: **09.04.2025**
(21) Application number: 23201707.9
(22) Date of filing: 04.10.2023
(51) Int. Cl.: B60K 35/60, B60R 11/02, E05B 83/26

(54) **A VEHICLE TRUNK MANAGEMENT SYSTEM**

(71) Applicant: Valeo Comfort and Driving Assistance, 94000 Créteil (FR)
(72) Inventor: MAHDY, Alaa, 94000 Créteil (FR); SALAMA, Mohamed, 94000 Créteil (FR); DAWOOD, Mena, 94000 Créteil (FR); ABDELQAWY, Desoky, 94000 Créteil (FR); HASSAN, Sameh, 94000 Créteil (FR); FAWZY, Amr, 94000 Créteil (FR)
(74) Representative: Delplanque, Arnaud

(57) **Abstract**

The proposed invention concerns a vehicle trunk management system (1) comprising:
- a control panel, in particular a touchscreen (2), configured to be attached permanently inside a vehicle trunk (T);
- at least one controllable vehicle device (10) that can be controlled by a user via the control panel, in particular the touchscreen (2).

## Description

The field of the present invention is that of a vehicle trunk management system.

In vehicles, various functions can be incorporated into the rear and/or front trunks. Currently, many of these functions are controlled by using mechanical switches. The proliferation of switches increases system complexity, making it less user-friendly and more challenging to operate. The objective of the present invention is to tackle this issue.

For this purpose, the invention proposes a vehicle trunk management system comprising:
- a control panel, in particular a touchscreen, configured to be attached permanently inside a vehicle trunk;
- at least one controllable vehicle device that can be controlled by a user via the control panel, in particular the touchscreen.

According to an aspect of the invention, the controllable vehicle device is located at least partially inside the trunk or is adjacent to an inner space of the trunk.

According to an aspect of the invention, the controllable vehicle device is selected from the following list:
- a device for folding down/up a back seat of the vehicle to extend the trunk space;
- a device for raising the spare tire from the trunk floor, providing easy access for the user;
- an AC system capable of providing air conditioning for the trunk;
- a device to open/close a vehicle digital safe in the trunk;
- a safety release switch located inside the trunk, the switch being capable of opening the trunk door from inside;
- any other device with a function related to the trunk.

According to an aspect of the invention, the control panel, in particular the touchscreen, is connected to a plurality of controllable vehicle devices. In this case, the touchscreen could be referred to as a multifunction touchscreen.

According to an aspect of the invention, the control panel, in particular the touchscreen, is connected wirelessly to the controllable vehicle device, using for instance a Bluetooth protocol.

According to another aspect of the invention, the control panel, specifically the touchscreen, is connected to the controllable vehicle device via a wired connection.

Instead of employing individual buttons for each function, the invention makes it possible to implement a compact touchscreen in the vehicle trunk to centralize the control of all necessary functions from within. Having the control panel directly inside the trunk provides an advantage in terms of electronic architecture, as it ensures that the control panel (the touchscreen) is near the devices to be controlled or the sensors within the trunk. The invention enables a more economical system.

According to an aspect of the invention, the vehicle trunk management system comprises at least one trunk sensor configured to capture a parameter or an image of the interior of the trunk, and the control panel, in particular the touchscreen, is connected to the sensor. This enables to provide some information to the user, for instance the temperature inside the trunk by using a temperature sensor.

According to an aspect of the invention, the touchscreen can be configured to display information to the user, such as error messages or available control options.

According to an aspect of the invention, the control panel is connected to a processing unit of the vehicle.

According to an aspect of the invention, the vehicle trunk management system comprises a protection element configured to protect the control panel.

According to an aspect of the invention, this protection element ensures the safeguarding of the control panel (such as the touchscreen) when it is not in use, for example, to prevent luggage from impacting and damaging the touchscreen.

According to an aspect of the invention, the protection element comprises a movable trapdoor capable of being closed to protect the control panel, and being opened to grant access to the control panel for the user.

According to an aspect of the invention, the control panel is attached to the trapdoor.

According to an aspect of the invention, the trapdoor is a pivotable trapdoor. The trapdoor may have a vertical or horizontal hinge.

According to an aspect of the invention, the control panel is placed in a housing that can be closed the trapdoor.

According to an aspect of the invention, the trapdoor is a sliding trapdoor.

According to an aspect of the invention, the control panel is placed on a lateral wall of the trunk.

The invention also relates to a vehicle comprising the vehicle trunk management system as disclosed above.

The invention also relates to a vehicle trunk management method comprising the following steps:
- providing a control panel, in particular a touchscreen, attached permanently inside a vehicle trunk;
- open the trunk;
- control a vehicle device via the control panel, in particular the touchscreen.

According to an aspect of the invention, the control panel is customizable, allowing users to install new applications that can control newly added plug-and-play devices, whether they operate wirelessly or through wired connections.

Further features, details and advantages of the invention will become more clearly apparent from reading the description given below by way of indication with reference to the drawings, in which:

[Fig 1] is a schematic view of a trunk management system according to an embodiment of the invention;
[Fig. 2] represents a protection element of the trunk management system of figure 1;
[Fig. 3] represents a protection element according to another embodiment of the invention;
[Fig. 4] represents a protection element according to another embodiment of the invention;
[Fig. 5] is a block diagram representing a method for operating the trunk management system of figure 1.

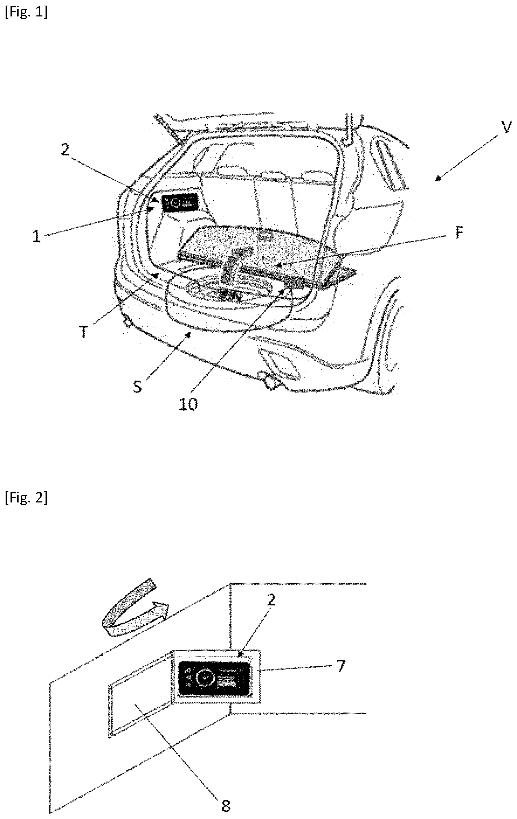

Figure 1 is a schematic view of a vehicle V equipped with a trunk management system 1 according to an embodiment of the present invention.

The vehicle trunk management system 1 comprises a control panel which is a touchscreen 2 configured to be attached permanently inside a vehicle trunk T. The touchscreen 2 forms a Human-Machine interface.

The vehicle trunk management system 1 further comprises controllable vehicle devices 10 that can be controlled by a user via the touchscreen 2.

The controllable vehicle devices 10 are located at least partially inside the trunk T or is adjacent to an inner space of the trunk T.

We can see on Figure 1 a device 10 for raising the spare tire S from the trunk floor F, providing easy access for the user. The device 10 may be equipped with an electric motor.

The controllable vehicle devices 10 can be selected from the following list:
- a device for folding down/up a back seat of the vehicle to extend the trunk space;
- an AC system capable of providing air conditioning for the trunk T;
- a device to open/close a vehicle digital safe in the trunk T;
- a safety release switch located inside the trunk, the switch being capable of opening the trunk door from inside;
- any other device with a function related to the trunk.

In the invention embodiment, the touchscreen 2 is connected to a plurality of controllable vehicle devices 10. In this case, the touchscreen 2 could be referred to as a multifunction touchscreen.

The touchscreen 2 is connected wirelessly to the controllable vehicle devices 10, using for instance a Bluetooth protocol, o r as an alternative, the touchscreen 2 is connected to the controllable vehicle device via a wired connection.

The vehicle trunk management system 1 may comprise at least one trunk sensor configured to capture a parameter or an image of the interior of the trunk, and the touchscreen 2 is connected to the sensor. This enables to provide some information to the user, for instance the temperature inside the trunk by using a temperature sensor.

The touchscreen 2 is connected to a processing unit of the vehicle and can be configured to display information to the user, such as error messages or available control options.

The vehicle trunk management system 1 comprises a protection element 7 configured to protect the touchscreen 2.

This protection element 7 ensures the safeguarding of the control panel (such as the touchscreen) when it is not in use, for example, to prevent luggage from impacting and damaging the touchscreen.

As shown on Figure 2, the protection element 7 comprises a movable trapdoor capable of being closed to the protect touchscreen 2, and being opened to grant access to the touchscreen 2 for the user.

In embodiment of Figure 2, the touchscreen 2 is attached to the trapdoor 7.

The trapdoor 7 is a pivotable trapdoor and has a vertical hinge. The hinge could be horizontal as an alternative. The touchscreen 2 is mounted on the trapdoor 7.

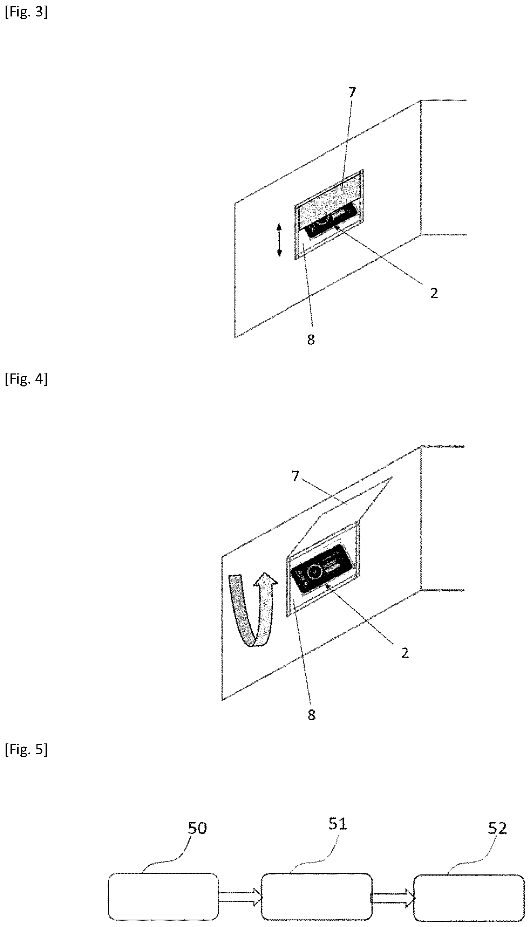

In a variant illustrated in Figure 4, the touchscreen 2 is independent from the trapdoor 7 and is permanently placed in the housing 8 that can be closed the trapdoor 7

In a variant illustrated in Figure 3, the trapdoor 7 is a sliding trapdoor.

The touchscreen 2 is placed on a lateral wall of the trunk T.

The invention enables various functions.

In the application described in Figure 5, the user (for instance a driver or a passenger of the vehicle) first opens the trunk T (step 50) then the user requests via the touchscreen 2 to fold down/up a back seat of the vehicle to extend the trunk space (step 51), and the vehicle trunk management system 1 manages the folding down/up of the back seat (step 52).

In another example, the user first opens the trunk T, then the user requests via the touchscreen 2 raising of the spare tire from the trunk floor, and the vehicle trunk management system 1 manages the raising of the spare tire from the trunk floor.

## Claims

1. A vehicle trunk management system (1) comprising:
- a control panel, in particular a touchscreen (2), configured to be attached permanently inside a vehicle trunk (T);
- at least one controllable vehicle device (10) that can be controlled by a user via the control panel, in particular the touchscreen (2).

2. The vehicle trunk management system (1) according to the preceding claim, wherein the controllable vehicle device (10) is located at least partially inside the trunk or is adjacent to an inner space of the trunk.

3. The vehicle trunk management system (1) according to any one of the preceding claims, wherein the controllable vehicle device (10) is selected from the following list:
- a device for folding down/up a back seat of the vehicle to extend the trunk space;
- a device for raising the spare tire from the trunk floor, providing easy access for the user;
- an AC system capable of providing air conditioning for the trunk;
- a device to open/close a vehicle digital safe in the trunk;
- a safety release switch located inside the trunk, the switch being capable of opening the trunk door from inside.

4. The vehicle trunk management system (1) according to any one of the preceding claims, wherein the control panel, in particular the touchscreen (2), is connected to a plurality of controllable vehicle devices (10).

5. The vehicle trunk management system (1) according to any one of the preceding claims, wherein the control panel, in particular the touchscreen, is connected wirelessly to the controllable vehicle device, using for instance a Bluetooth protocol.

6. The vehicle trunk management system (1) according to any one of claims 1 to 5, wherein the control panel, specifically the touchscreen, is connected to the controllable vehicle device via a wired connection.

7. The vehicle trunk management system (1) according to any one of the preceding claims, wherein the vehicle trunk management system (1) comprises at least one trunk sensor configured to capture a parameter or an image of the interior of the trunk, and the control panel, in particular the touchscreen, is connected to the sensor.

8. The vehicle trunk management system (1) according to any one of the preceding claims, wherein the touchscreen (2) is configured to display information to the user, such as error messages or available control options.

9. The vehicle trunk management system (1) according to any one of the preceding claims, wherein the vehicle trunk management system comprises a protection element (7) configured to protect the control panel.

10. The vehicle trunk management system (1) according to the preceding claim, wherein the protection element comprises a movable trapdoor (7) capable of being closed to protect the control panel, and being opened to grant access to the control panel for the user.

11. The vehicle trunk management system (1) according to the preceding claim, wherein the control panel (2) is attached to the trapdoor (7).

12. The vehicle trunk management system (1) according to claim 10 or 11, wherein the control panel (2) is placed in a housing (8) that can be closed the trapdoor.

13. The vehicle trunk management system (1) according to any one of claim 10 to 12, wherein the trapdoor is a sliding trapdoor.

14. A vehicle comprising the vehicle trunk management system according to any of the preceding claims.

15. A vehicle trunk management method comprising the following steps:
- providing a control panel, in particular a touchscreen, attached permanently inside a vehicle trunk;
- open the trunk;
- control a vehicle device via the control panel, in particular the touchscreen.
